# EUROPÄISCHE PATENTANMELDUNG

(11) **EP 1 158 760 A1**
(43) Veröffentlichungstag der Anmeldung: **28.11.2001**
(21) Anmeldenummer: 00110974.3
(22) Anmeldetag: 26.05.2000
(51) Int. Cl.: H04N 1/028

(54) **Fotografische Leuchtdioden-Bilderfassungsvorrichtung**

(71) Anmelder: GRETAG IMAGING Trading AG, 5430 Wettingen (CH)
(72) Erfinder: Lehmann, Mathias, 8044 Zürich (CH); Rotach, Hansjörg, 8307 Effretikon (CH); Kobel, Peter, 8957 Spreitenbach (CH); von Tobel, Georg, 5430 Wettingen (CH)
(74) Vertreter: Muschke, Markus, Dipl.-Phys.

(57) **Zusammenfassung**

Fotografische Erfassungsvorrichtung zum Erfassen fotografischer Bildinformation von fotografischen Medien, mit einem Lichtintegrator, der von LED-Chips emittiertes Licht mit einer für den jeweiligen LED-Chip spezifischen Farbe empfängt, homogenisiert und von einer Austrittsöffnung abstrahlt, um ein eine fotografische Bildinformation tragendes fotografisches Medium zu bestrahlen, mit einem Detektionsmittel zum Detektieren des durch das fotografische Medium entsprechend der Bildinformation modulierten Lichtes, wobei für mindestens drei verschiedene Farben eine Vielzahl von LED-Chips gleicher Emissionsfarbe vorgesehen sind, die auf mindestens einem wärmeleitenden Substrat angeordnet sind, mit dem die LED-Chips in wärmeleitenden Kontakt sind.

## Beschreibung

Die vorliegende Erfindung betrifft eine fotografische Erfassungsvorrichtung, wie z.B. einen Scanner oder einen Printer zum Erfassen (farbiger) fotografischer Bildinformation von fotografischen Medien, insbesondere Filmen, unter Verwendung von Leuchtdioden.

Ein Scanner zum Abtasten fotografischer Filme, der Leuchtdioden als Lichtquelle verwendet, ist aus EP 0 948 191 A2 (entsprechend US 5,982,957) bekannt. Bei dieser Vorrichtung wird das Licht von verschiedenfarbigen Leuchtdioden durch eine integrierende Vorrichtung gemischt, ein zu durchleuchtender Film wird mit dem gemischten Licht beaufschlagt und das von dem Film transmittierte Licht wird von einem CCD-Detektor erfasst. Zweck der Anordnung ist, eine möglichst optimale spektrale Empfindlichkeit des Scanners zu erzielen. Die spektrale Empfindlichkeit des Scanners ergibt sich aus einer kombinierten Funktion des Spektrums der Lichtquelle und der spektralen Empfindlichkeit des CCD-Sensors. Die gewünschte spektrale Empfindlichkeit des Scanners wird dadurch erzielt, dass das Emissionsspektrum der Lichtquelle durch geeignete Kombination von LEDs unterschiedlicher spektraler Emissionscharakteristik kombiniert werden. Die Integriervorrichtung dient der Mischung der verschiedenen Spektren der LEDs. Dabei werden herkömmliche, mit einem Linsenkörper versehene LEDs verwendet, die auf einer Leiterplatte montiert sind.

Herkömmliche LEDs bestehen im wesentlichen aus einem Linsenkörper, aus dem zwei Drahtanschlüsse zum elektrischen Kontakt mit der Anode und der Kathode der eigentlichen (Halbleiter-)Leuchtdiode vorstehen, die im Folgenden als LED-Chip bezeichnet wird. Der LED-Chip nimmt nur einen kleinen Raum im Inneren des Linsenkörpers ein. Der Linsenkörper ist typischerweise domförmig und besteht z.B. aus Epoxidharz. Der LED-Chip mit Linsenkörper und Anschlussdrähten wird hierin als LED bezeichnet. Um das Licht einer größeren Anzahl von LEDs unterschiedlichen Spektrums in einen Integrator einführen zu können, sieht die bereits oben erwähnte EP 0.948 191 sich konisch verjüngende Lichtsammler ("concentrator cones") mit reflektierenden Innenwänden vor, deren schmales Ende in den Lichtintegrator mündet und an deren breitem Ende eine Anzahl LEDs angeordnet sind.

Aufgabe der Erfindung ist es, eine Bilderfassungsvorrichtung bereitzustellen, die Leuchtdioden verwendet und dennoch kurze Belichtungszeiten zur Bilderfassung bei kompaktem und kostengünstigem Aufbau der Lichtquelle ermöglicht.

Vorstehende Aufgabe wird durch den Gegenstand des Anspruches 1 gelöst. Vorteilhafte Weiterbildungen gehen aus den Unteransprüchen hervor.

Erfindungsgemäß werden nicht LEDs (mit Linsenkörper), sondern nur die eigentliche Halbleiter-Leuchtdiode, nämlich der LED-Chip, verwendet. Dies bringt gleich zwei Vorteile mit sich. Zum einen ist eine erheblich dichtere Packung der LED-Chips (Anzahl der LED-Chips pro Fläche) möglich als bei einer Anordnung von herkömmlichen LEDs (mit Linsenkörper), da der Linsenkörper bzw. das LED-Gehäuse einen Großteil der Grundfläche der LED einnimmt. Das Verhältnis der Grundfläche eines LED-Chips zur Grundfläche eines LED-Gehäuses beträgt ca. ein bis zwei Größenordnungen. So liegt z.B. der Durchmesser von LEDs bei 3-5 mm und die Seitenlänge von LED-Chips beträgt z.B. 0,1-0,5 mm. Da erfindungsgemäß einzelne LED-Chips auf einem Substrat in einem möglichst kurzen Abstand, der vorzugsweise kleiner als der vierfache Durchmesser eines LED-Chips ist und besonders bevorzugt in etwa oder kleiner dem Durchmesser eines LED-Chips ist, angeordnet werden, kann auf einer kleinen Fläche eine hohe Leuchtdichte erzielt werden. Dadurch kann auf einen konusartigen Lichtkonzentrator verzichtet werden und die LED-Chips können vorzugsweise direkt bei den Eintrittsöffnungen eines Lichtintegrators angeordnet werden, wodurch eine effektivere Lichteinkopplung in dem Lichtintegrator erzielt werden kann, da es zu keinen Reflexionsverlusten an den Innenwänden des konusartigen Lichtkonzentrators kommt. Vorzugsweise bedecken die LED-Chips mehr als 5 %, besonders bevorzugt mehr als 10 % oder mehr als 25 % der Substratoberfläche.

Zum anderen erlaubt die Verwendung von LED-Chips in der erfindungsgemäßen Art und Weise eine gute Wärmeabfuhr. Der herkömmliche Linsenkörper oder Gehäusekörper einer LED weist nur mäßige Wärmeleitungseigenschaften auf. Erfindungsgemäß wird der LED-Chip nicht in einen Linsenkörper bzw. Gehäusekörper eingebettet sondern mit einem Substrat in wärmeleitenden Kontakt gebracht, wobei das Substrat einen niedrigeren Wärmewiderstand als herkömmliche Leiterplatten aufweist. Vorzugsweise liegt der Wärmewiderstand mindestens um eine Größenordnung, vorzugsweise um etwa zwei Größenordnungen unter dem des herkömmlichen Leiterplattenmaterials FR-4. Als Materialien, die entsprechende Wärmeleitfähigkeiten von 20 W / m K und mehr aufweisen, kommen Keramiken wie Aluminiumoxid oder Aluminiumnitrit in Frage. Falls es die Art der elektrischen Kontaktierung erlaubt, kann das Substrat sogar metallisch sein (Kupfer, Aluminium, ...), um die Wärmeleitfähigkeit noch weiter zu erhöhen (z.B. bis 400 W / m K für Kupfer).

Vorzugsweise wird der LED-Chip auf das Substrat, z.B. durch Bonding oder SMT (Oberflächenmontagetechnik), derart angebracht, dass der spezifische Wärmkontaktwiderstand zwischen Substrat und LED-Chip möglichst klein ist (z.B. kleiner als 10 K cm² / W, vorzugsweise kleiner als 1 K cm² */* W). Wird dieser Kontakt durch Silberleitkleber (auf Epoxy-Basis) hergestellt, beträgt der entsprechende Wert vorzugsweise weniger als 0,3 K cm² / W. Dieser Wert ist proportional zur Dicke der Klebschicht, die in der Größenordnung von 10 bis 100 Mikrometern liegen kann. Da die Grundfläche der LED-Chips auch bei dichter Packung auf dem Substrat deutlich kleiner als die pro LED-Chip besetzte Substratoberfläche ist, fällt der Beitrag des Kontaktes zwischen LED-Chip und Substrat zum gesamten Wärmewiderstand entsprechend stark ins Gewicht. Vorzugsweise sind die LED-Chips nicht einstückig mit dem Substrat ausgebildet, also kein Single-Waver-Aufbau gewählt, um ein Substrat mit optimalen Wärmeleitungseigenschaften auswählen zu können. Insbesondere wird vorzugsweise als Substrat ein Material mit besseren Wärmeleitungseigenschaften als die bei der LED-Chip-Herstellung eingesetzten Halbleitermaterialien verwendet.

Die Abführung der Wärme aus dem Substrat kann z.B. über konventionelle Kühlkörper, ev. mit Ventilatoren oder mit noch effizienteren Methoden (Kühlflüssigkeit) geschehen. Falls das Substrat nicht selbst als Kühlkörper fungiert, wird der thermische Kontakt zwischen Substrat und Kühlkörper (Wärmesenke) vorzugsweise mit Wärmeleitpasten oder -folien hergestellt, wobei auch hier ein spezifischer Wärmewiderstand von vorzugsweise höchsten 0,3 K cm² / W angestrebt wird. Die Dicke entsprechender Wärmeleitfolien liegt dabei in der Größenordnung von 0,1 mm.

Der gesamte Wärmewiderstand vom lichtemittierenden Übergang bis zur Umgebungsluft bestimmt letztlich den maximalen Strom, mit dem die LED-Chips bei einer gegebenen Packungsdichte betrieben werden. Bei einer maximal zulässigen Temperatur von z.B. 100°C am Übergang erlaubt ein kleinerer Wärmewiderstand also entweder höhere Ströme pro LED-Chip oder eine höhere Packungsdichte. Die Reduktion des gesamten Wärmewiderstandes entspricht also in jedem Fall einer Erhöhung der mittleren Leuchtdichte der Leuchtdiodenanordnung.

Vorzugsweise sind die LED-Chips so auf dem Substrat angeordnet, dass sie von diesem vorstehen, sie werden also nicht von dem Substrat umschlossen. Vorzugsweise ist das Substrat an der Seite der LED-Chips angeordnet, die von dem Lichtintegrator wegweist. Das Substrat kann somit lichtundurchlässig ausgestaltet werden, wodurch sich eine breite Palette gut wärmeleitender Substratmaterialien ergibt. Vorzugsweise ist das Substratmaterial an seiner Oberfläche zumindest zwischen den einzelnen LED-Chips lichtreflektierend ausgebildet, um Licht, das aus dem Lichtintegrator durch die Eintrittsöffnungen austreten möchte, zurückzureflektieren.

Vorzugsweise sind die LED-Chips derartig wärmeleitend mit dem Substrat verbunden und ist das Substrat mit einem derart niedrigen Wärmewiderstand ausgestattet, dass über den wärmeleitenden Kontakt zwischen dem LED-Chip und dem Substrat mehr Wärme von dem LED-Chip zu einer Wärmesenke abgeführt werden kann als dies herkömmlicherweise durch Wärmeleitung über die elektrischen Anschlussdrähte oder über den Linsenkörper von herkömmlichen LEDs möglich ist oder im Normalbetrieb stattfindet. Die Kombination aus LED-Chips und Substrat wird als Leuchtdiodenanordnung bezeichnet. Vorzugsweise werden mindestens drei Leuchtdiodenanordnungen vorgesehen.

Das Substrat ist wiederum vorzugsweise mit einer Wärmesenke, z.B. einem Kühlkörper, einem Kühlblech, Ventilator, Wasserkühlkreislauf etc. verbunden. Die Wärmesenke nimmt die von den LED-Chips abgegebene und durch das gut wärmeleitende Substrat weitergegebene Wärme auf, so dass sich eine angestrebte Betriebstemperatur für die LED-Chips einstellt.

Bei Bedarf wird das spektrale Abstrahlungsspektrum der LED-Chips durch Filtern an ein gewünschtes Spektrum angepasst. Insbesondere werden Infrarotanteile beseitigt. Da die Filterwirkung insbesondere von Interferenzfiltern von der optischen Ganglänge und damit vom Lichteinfallswinkel abhängt, wird die Abstrahlung der LED-Chips vorzugsweise vor der Filterung gerichtet. Zu diesem Zweck wird vorzugsweise eine Vielzahl kleiner Linsen oder ein Mikrolinsenarray eingesetzt, das lichtintegratorseitig vor die LED-Chips so platziert wird, dass sich vor jedem LED-Chip eine kleine Linse befindet, die die Abstrahlung etwas nach vorne richtet und deren Abmessung vorzugsweise in etwa dem Abstand zweier benachbarter LED-Chips entspricht. Auf diese Art und Weise ergibt sich eine exaktere spektrale Filterung als ohne Mikrolinsenarray. Nach dem Mikrolinsenarray wird vorzugsweise der Filter (Interferenzfilter) platziert. Nach dem Interferenzfilter kann wahlweise ein weiteres Mikrolinsenarray vorgesetzt werden, um die Strahlung wieder aufzuweiten, bevor sie in den Integrator eintritt.

Vorzugsweise ist der Lichtintegrator diffus mehrfach reflektierend und insbesondere als Hohlraum ausgebildet, der das eingestrahlte Licht von seinen Innenwänden reflektiert. Ein typischer Integrator stellt z.B. eine Ulbrichtkugel dar. Jedoch kann der Hohlraum in seiner Form auch von einer Kugel abweichen und z.B. als Vieleck oder Halbkugel ausgebildet sein oder mehrere separate Reflexionsflächen aufweisen. Vorzugsweise sind bei einem Hohlraum mehrere Eintrittsöffnungen vorgesehen, wobei an jeder Eintrittsöffnung eine Leuchtdiodenanordnung mit einer Vielzahl von LED-Chips vorgesehen ist. Die Leuchtdiodenanordnungen werden vorzugsweise so platziert, dass sie jeweils einen Großteil, insbesondere mehr als 50% der Innenfläche des Hohlraums bestrahlen. Dies vergrößert die Homogenisierungseffekte des Hohlraums hinsichtlich des Lichtintensitätsprofils bei der Austrittsöffnung des Hohlraums und erlaubt außerdem den Hohlraum, möglichst klein zu gestalten, um so eine höhere Lichtintensität am Ausgang zu erzielen. Vorzugsweise werden die Lichtdiodenanordnungen so platziert, dass die Austrittsöffnung des Hohlraums nicht direkt bestrahlt wird.

Der Hohlraum hat vorzugsweise eine Reflektivität von besser als 90%, besonders bevorzugt besser als 95% oder 99%. Hierzu wird der Hohlraum vorzugsweise mit einer weißen Beschichtung überzogen, die das Licht diffus reflektiert. Hierbei kann es sich z.B. um Bariumsulfat handeln. Auch kann als Reflexionsmaterial "Spektralon" der Firma Labsphere mit einem hohen Reflexionskoeffizienten von 99% verwendet werden. Besonders bevorzugt wird die Innenfläche des Hohlraums mit einem flexiblen Material, z.B. in Folienform, ausgekleidet. Dazu kann z.B. das im US-Patent 5,892,621 beschriebene Material mit der Bezeichnung "Whitestar" von der Firma Gore verwendet werden. Auch können beliebige andere Materialien, wie Lacke, Folien oder Beschichtungen zur Reflexion eingesetzt werden.

Die Substrate können zumindest in ihren Zwischenräumen zwischen den LED-Chips ebenfalls mit einer reflektierenden Oberfläche versehen werden. Dies ist insbesondere dann von Vorteil, wenn die Leuchtdiodenanordnungen direkt an Eintrittsöffnungen des Hohlraumes angeordnet werden. Das Substrat bildet in diesem Fall eine reflektierende Wand des Hohlraums.

Sind mehrere Leuchtdiodenanordnungen vorgesehen, so wird die Geometrie der Anordnung vorzugsweise für alle bezüglich der Austrittsöffnung gleich gewählt, also vorzugsweise gleicher Abstand zur Austrittsöffnung und/oder gleiche Winkelbeziehung.

Als Lichtintegrator kann ein Hohlraum oder eine andere Anordnung, z.B. aus (planen oder gekrümmten) Spiegeln oder anderen diffus reflektierenden planen oder gekrümmten Wandelementen, verwendet werden, bei der eine Mehrfachreflexion zwischen verschiedenen Oberflächen zu einer Homogenisierung des Lichtes führt.

Vorzugsweise sind die Substrate plan ausgebildet, sie können aber z.B. auch an die Innenkrümmung eines Hohlraums angepasst werden. Handelt es sich bei dem Hohlraum z.B. um eine Kugelform, so können die Substrate mit den darauf befindlichen LED-Chips der Krümmung der Kugel folgen.

Vorzugsweise werden (Farb-)Gruppen einer Vielzahl (z.B. 100 der mehr) von LED-Chips gleicher Farbe oder gleicher spektraler Emissionscharakteristik vorgesehen, wobei eine Leuchtdiodenanordnung nur eine einzige Farbgruppe oder LED-Chips verschiedener Farbgruppen aufweisen kann. Vorzugsweise werden LED-Chips in 3, 4 oder mehr Farben vorgesehen, die vorzugsweise das sichtbare Spektrum abdecken bzw. in diesem liegen, wobei z.B. zwei davon am oberen und unteren Rand des sichtbaren Spektrums liegen (z.B. rot und blau). Zusätzlich zu den erfindungsgemäßen Leuchtdiodenanordnungen mit LED-Chips können herkömmliche LEDs angeordnet werden, insbesondere im Infrarotbereich, die insbesondere im Zusammenhang mit einer Kratzerunterdrückungs-Software verwendet werden. Für diese einzelnen herkömmlichen LEDs können gesonderte Eintrittsöffnungen in dem Hohlraum vorgesehen werden.

LED-Chips unterschiedlicher Farbe weisen typischerweise eine unterschiedliche Lichtintensität auf. Außerdem werden, je nach Detektionsmittel (z.B. fotoelektrischer Wandler oder lichtempfindliches und farbempfindliches Medium), unterschiedliche Intensitäten für die verschiedenen Farben benötigt. Um die Bilderfassungszeit möglichst kurz zu halten, wird deshalb die Anzahl der LED-Chips einer Gruppe (das heißt einer Farbe) an die Erfordernisse angepasst, so dass sich vorzugsweise in etwa die gleiche Emissionszeitdauer für jede Farbgruppe ergibt. Dadurch kann der Bilderfassungsprozess weiter beschleunigt werden. Typischerweise ist z.B. die Lichtintensität der roten LED-Chips höher als der grünen und blauen. Sind also z.B. LED-Chips drei unterschiedlicher Farben vorgesehen, so werden mehr blaue und grüne als rote LED-Chips vorgesehen, falls ein CCD-Sensor vorgesehen wird. Im Falle eines Fotopapiers als Detektionsmittel sollten mehr rote als blaue und grüne LED-Chips vorgesehen werden.

Wird als Detektionsmittel ein fotoelektrischer Wandler verwendet, insbesondere eine CCD, so ist diese bevorzugt nicht mit Spektralfiltern ausgestattet und kann somit unterschiedliche Farben nicht unterscheiden, um die Lichtempfindlichkeit und/oder die Auflösung (Pixelanzahl) zu steigern und die Bilderfassungszeit zu verkürzen bzw. die Bildauflösung zu vergrößern. Um dennoch die Farbeigenschaften des fotografischen Mediums (flächig aufgelöst) korrekt zu erfassen, werden zu einer Zeit nur die LED-Chips einer Gruppe (einer Farbe bzw. eines Spektrums) zur Lichtemission angeregt. Die zu dieser Zeit in dem fotoelektrischen Wandler erzeugten Signale (Ladungen) können somit eindeutig einer bestimmten Farbe zugeordnet werden. Zu diesem Zweck wird vorzugsweise die Ansteuerung der Gruppen sequenziell vorgenommen und mit dem Auslesen der Signale des fotoelektrischen Wandlers abgestimmt bzw. synchronisiert. Für die Bilderfassung eines fotografischen Mediums (ein Bild eines Films) wird eine Zeit von weniger als 100 ms, vorzugsweise von weniger als 10 ms, angestrebt. Auf Grund der schnellen Ansprechzeit der LED-Chips kann der Zeitabstand zwischen der Ansteuerung der verschiedenfarbigen LED-Chips vorzugsweise (erheblich) kürzer gewählt werden als die Emissionsdauer. Selbstverständlich sind z.B. während des Filmtransports auch längere Dunkelphasen möglich.

Das aus dem Lichtintegrator austretende Licht gelangt direkt oder über lichtführende Mittel (z.B. Linsen, Spiegel, Blenden) zu dem fotografischen Medium und wird an diesen durch Transmission oder Reflexion in seiner Intensität und, bei Farbbildern, spektral abhängig moduliert. Die Austrittsöffnung des Lichtintegrators kann in etwa dieselbe Größe aufweisen wie das mit Licht zu beaufschlagende fotografische Medium. In diesem Fall wird das fotografische Medium vorzugsweise in einen Abstand zur Austrittsöffnung platziert, der im Vergleich zu den Abmessungen der Austrittsöffnung kurz ist. Alternativ kann auch die Austrittsöffnung kleiner als die Abmessung des fotografischen Mediums (z.B. kleiner als ½ oder ¼ der Fläche eines Frames) gestaltet werden, um die Größe des Lichtintegrators und damit die Anzahl der LED-Chips reduzieren zu können. In diesem Fall wird dann vorzugsweise die Austrittsöffnung mittels einer Abbildungsoptik zwischen Austrittsöffnung und fotografischem Medium optisch vergrößert, so dass das fotografische Medium vollständig ausgeleuchtet (bei Messung in Reflexion) oder durchleuchtet (bei Messung in Transmission) wird. Hierzu können Objektive und vorzugsweise eine Kondensorlinse eingesetzt werden. Die oben erwähnte Abbildungsoptik wird im Folgenden als zweite Optik bezeichnet. Neben dieser zweiten Optik wird vorzugsweise eine erste Optik vorgesehen, die das fotografische Medium auf das Detektionsmittel abbildet. In diesem Fall und für den Fall der Messung in Transmission wird dann vorzugsweise die zweite Optik so gestaltet, dass sie die Austrittsöffnung vergrößert auf die Eintrittsöffnung der ersten Optik abbildet.

Vorzugsweise ist weiter eine Halteeinrichtung vorgesehen, um fotografische Medien unterschiedlichen Formats zu haltern. Handelt es sich bei dem fotografischen Medium um einen Film, so wird die Halteeinrichtung vorzugsweise als Filmmaske ausgebildet, die für die verschiedenen Filmformate (z.B. APS-Film, 135-Film) passend ist. Die Halteeinrichtung weist mindestens zwei verschiedene Masken auf, um die fotografischen Medien unterschiedlichen Formats an der für die Bilderfassung vorgegebenen Position zu halten. Zusätzlich hierzu ist eine Austauschmechanik vorgesehen, um jeweils eine der zur Verfügung stehenden Masken auswählbar in die vorgegebene Bilderfassungsposition zu bringen. Bei dieser Austauschmechanik kann es sich insbesondere um einen Rotor handeln, an dessen Umfang mehrere Filmmasken vorgesehen sind. Kombiniert hiermit kann die Position der oben erwähnten zweiten Optik geändert werden oder eine andere zweite Optik mit einer Austauschmechanik zwischen Austrittsöffnung und dem fotografischen Medium eingeführt werden, um die Größe des Lichtstrahls aus dem Lichtintegrator an die jeweilig verwendete Maske anzupassen. Auf diese Art und Weise kann die Lichtintensität für jedes Format optimal ausgenützt werden. Insbesondere kann für kleinere Formate eine kürzere Belichtungszeit erzielt werden.

Wird ein farbsensitives Detektionsmittel verwendet, das zwischen verschiedenen Farben unterscheiden kann, so erfolgt vorzugsweise eine gleichzeitige oder sich zeitlich überlappende Bestrahlung mit den Gruppen von LED-Chips, um den Bilderfassungsvorgang weiter zu verkürzen. Dies ist z.B. dann von Vorteil, wenn als Detektionsmittel ein Fotopapier oder ein CCD-Sensor mit eingebauten Farbfiltern verwendet wird.

Bei der folgenden Beschreibung verschiedener Ausführungsformen werden weitere erfindungswesentliche Merkmale offenbart. Dabei können Merkmale unterschiedlicher Ausführungsformen miteinander kombiniert werden. Gleiche Bezugszeichen bezeichnen gleiche Teile.
- Fig. 1: zeigt eine Draufsicht auf eine erfindungsgemäße Leuchtdiodenanordnung;
- Fig. 2: zeigt eine Ulbrichtkugel im Querschnitt mit Leuchtdiodenanordnungen;
- Fig. 3: zeigt eine Leuchtdiodenanordnung mit Mikrolinsenarray;
- Fig. 4A: zeigt eine optische Anordnung mit Kondensorlinse zwischen der Ulbrichtkugel und dem Film;
- Fig. 4B: zeigt eine optische Anordnung wie in Fig. 4A, jedoch mit einer Fresnel-Linse als Kondensorlinse;
- Fig. 5: zeigt eine Seitenansicht einer erfindungsgemäßen Bilderfassungsvorrichtung;
- Fig. 6: zeigt eine Ansicht von schräg unten einer Ulbrichtkugel mit Kondensorlinse und Film;
- Fig. 7: zeigt einen Querschnitt durch den optischen Abbildungsteil einer erfindungsgemäßen Erfassungsvorrichtung;
- Fig. 8: zeigt eine perspektivische Ansicht des Abbildungsteils der Figur 7.

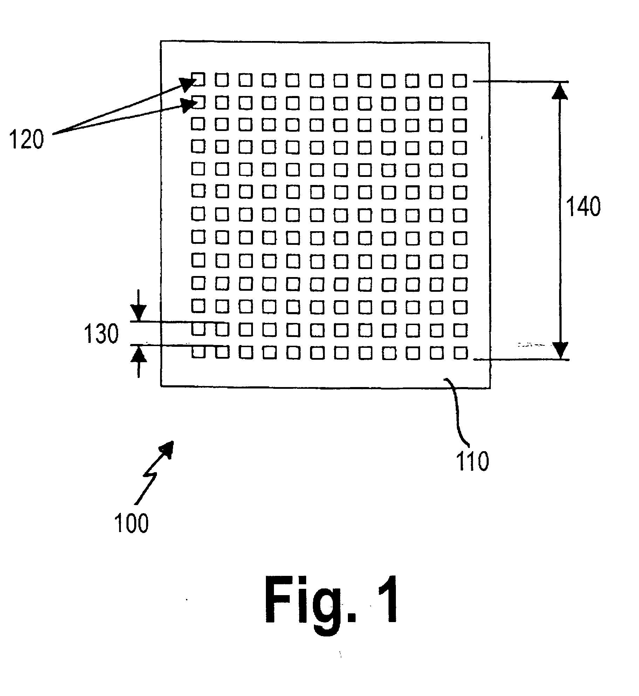

Fig. 1 zeigt eine Leuchtdiodenanordnung 100 mit einem Substrat 110 und einer Vielzahl LED-Chips 120. Die LED-Chips können von verschiedener Gestalt sein (z.B. rund oder rechteckig). Die LED-Chips können z.B. eine Kantenlänge von 0,2 bis 0,4 mm aufweisen. In diesem Fall kann z.B. der Abstand 130 zwischen den einzelnen LED-Chips 0,5 bis 1 mm betragen. Die LED-Chips können sich über eine Strecke 140 von einigen Zentimetern erstrecken. In diesem Fall können z.B. mehr als 100 LED-Chips auf dem Substrat 110 angeordnet sein.

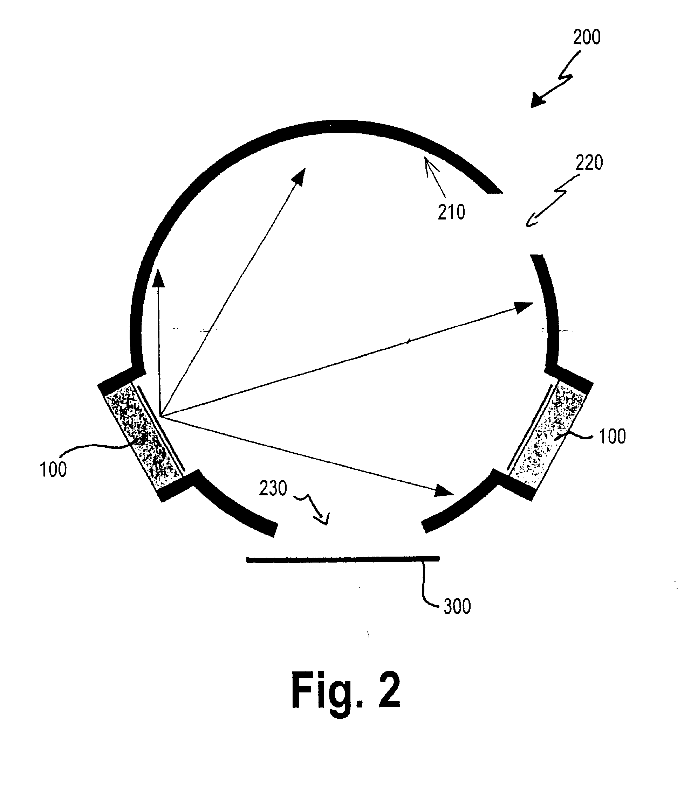

Fig. 2 zeigt eine Ulbrichtkugel 200 im Querschnitt, die als Lichtintegrator dient. In Eintrittsöffnungen der Ulbrichtkugel 200 befinden sich Leuchtdiodenanordnungen 100, die Licht in den Hohlraum abstrahlen, das von der weißen, diffus reflektierenden Oberfläche 210 der Ulbrichtkugel reflektiert wird. Eine weitere Eintrittsöffnung 220 für herkömmliche (z.B. infrarote) LEDs mit Linsenkörper kann vorgesehen sein. Wie in Fig. 2 zu sehen ist, befinden sich die Leuchtdiodenanordnungen 100 in der unteren Hälfte der Ulbrichtkugel und bestrahlen nicht direkt die unten liegende Austrittsöffnung 230. Bei der in der Fig. 2 gezeigten Ausführungsform befindet sich direkt unterhalb der Ulbrichtkugel 200 der Film 300, der durch das von der Ulbrichtkugel austretende Licht durchleuchtet wird. Die Austrittsöffnung 230 kann eine an einen Filmrahmen bzw. ein Einzelbild ("Frame") angepasste Form aufweisen. Vorzugsweise ist sie etwas größer als das zu durchleuchtende Einzelbild (z.B. bis zu 30% größer). Der Film 300 befindet sich möglichst dicht an der Austrittsöffnung. Vorzugsweise ist der Abstand zwischen Film und Austrittsöffnung kleiner als die Abmessung der Austrittsöffnung.

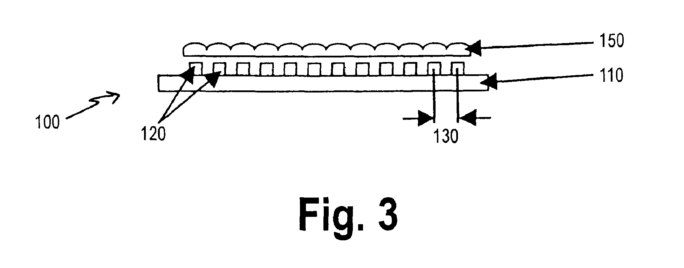

Fig. 3 zeigt eine Leuchtdiodenanordnung 100 mit Substrat 110, LED-Chips 120 und Mikrolinsenarray 150. Wie in Fig. 3 zu sehen ist, sind die einzelnen LED-Chips auf dem Substrat 110 angeordnet und z.B. mit "Chip-on-Board"-Technik auf diesem möglichst dicht gepackt. Die LED-Chips 110 stehen von dem Substrat vor und weisen zu der Innenseite des Hohlraumes 200. Direkt oberhalb der LED-Chips befindet sich ein Mikrolinsenarray aus einer Vielzahl von Mikrolinsen, wobei jeweils eine Mikrolinse einem LED-Chip zugeordnet ist. Eine Mikrolinse befindet sich somit vorteilhaft oberhalb eines LED-Chips. Der Abstand zwischen LED-Chip und Mikrolinse liegt vorzugsweise in der Größenordnung des Durchmessers des Abstandes 130, um die Anordnung kompakt zu halten. Nachgeordnet zu dem Mikrolinsenarray 150 können nicht gezeigte Interferenzfilter angeordnet werden.

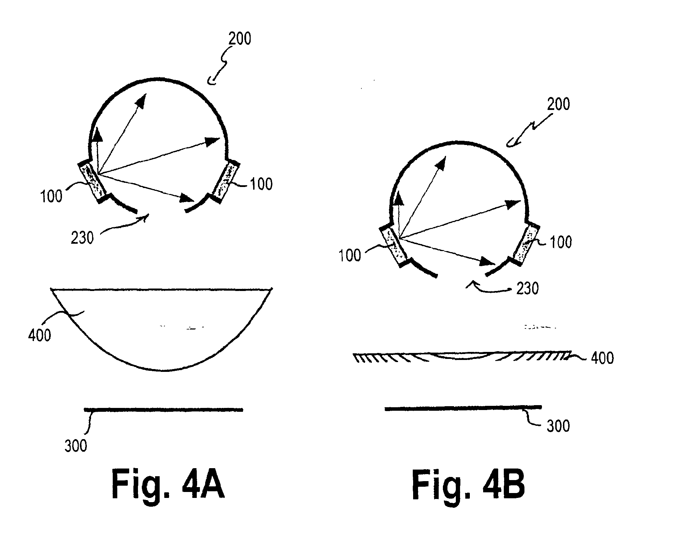

Fig. 4A und 4B zeigen eine zur Fig. 2 alternative Ausführungsform, bei der sich zwischen der Ebene, in der ein Film transportiert wird, und dem Lichtintegrator 200 eine optische Anordnung (Abbildungsoptik) befindet. Die optische Anordnung ist als Kondensorlinse 400 ausgebildet. In Fig. 4A handelt es sich um eine herkömmliche Kondensorlinse, die z.B. asphärisch ausgebildet sein kann. In Fig. 4B ist die Kondensorlinse 400 als Fresnel-Linse ausgebildet. Dies erlaubt einen kompakteren Aufbau. Es sind auch Kondensorsysteme mit mehr als einer Linse (z.B. 2) möglich.

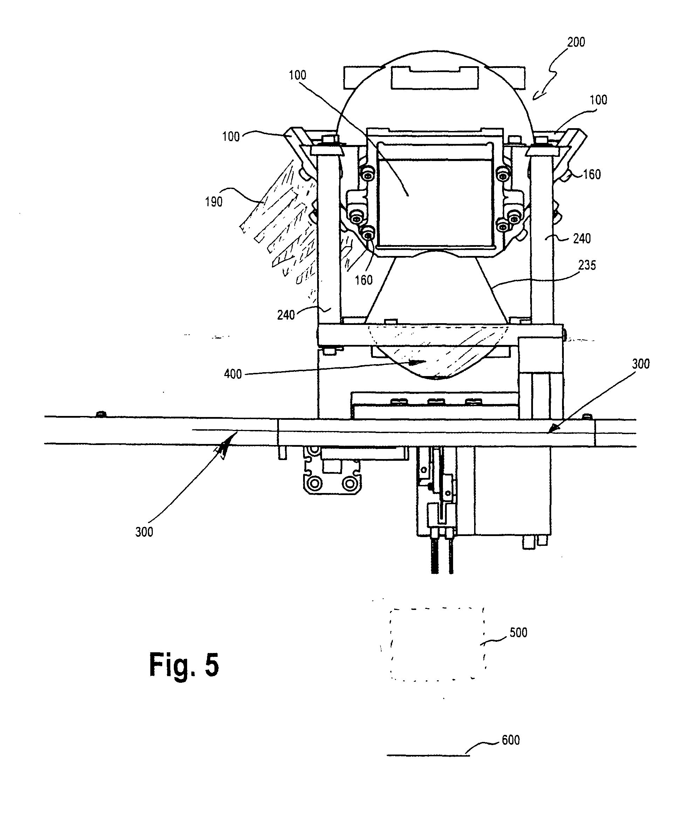

Fig. 5 zeigt eine erfindungsgemäße Bilderfassungsvorrichtung. Die Ulbrichtkugel 200 ist in dem Bereich der unteren Halbkugel mit Leuchtdiodenanordnungen 100 versehen. Auf der linken Seite ist angedeutet, dass mit der Leuchtdiodenanordnung 100 ein Kühlkörper 190 verbunden ist, der als Wärmesenke dient. Beispielsweise können LED-Chips nur einer einzigen Farbe sich auf jeder der Leuchtdiodenanordnungen 100 befinden, wobei sich aber die Farben von Leuchtdiodenanordnung zu Leuchtdiodenanordnung unterscheiden. Dies ist insbesondere dann vorteilhaft, wenn zwischen den Leuchtdiodenanordnungen und dem Lichtintegrator Interferenzfilter angeordnet sind, um das emittierte Licht zu filtern. Es können LED-Chips unterschiedlicher Farbe auf derselben Leuchtdiodenanordnung angebracht werden, insbesondere LED-Chips aller eingesetzten Farben. Eine mechanische Haltevorrichtung 240 zum Halten der Ulbrichtkugel ist vorgesehen. Die Leuchtdiodenanordnungen 100 können lösbar an den Eintrittsöffnungen des Lichtintegrators vorgesehen werden, um so bei Bedarf unterschiedliche Leuchtdiodenanordnungen z.B. mit LED-Chips einer anderen Emissionsfarbe an dem Lichtintegrator anbringen zu können. Hierzu sind als mechanische Befestigungsmittel z.B. Schrauben 160 vorgesehen.

Aus der Austrittsöffnung der Ulbrichtkugel tritt ein Lichtkegel 235 aus, der auf eine Kondensorlinse 400 trifft. Das Licht wird von dort auf ein sich in der Filmebene 300 befindliches Bild geleitet. Das Licht durchstrahlt dieses Bild und wird von einem Objektiv 500 erfasst. Die Austrittsöffnung des Lichtintegrators wird vorzugsweise durch die Kondensorlinse 400 auf die Eintrittsöffnung des Objektivs 500 abgebildet. Das Objektiv 500 bildet den Film in der Ebene 300 auf eine CCD ab. Bei einem erfindungsgemäßen Fotoprinter wird dasselbe Prinzip angewendet, jedoch wird anstelle einer CCD ein Fotopapier verwendet.

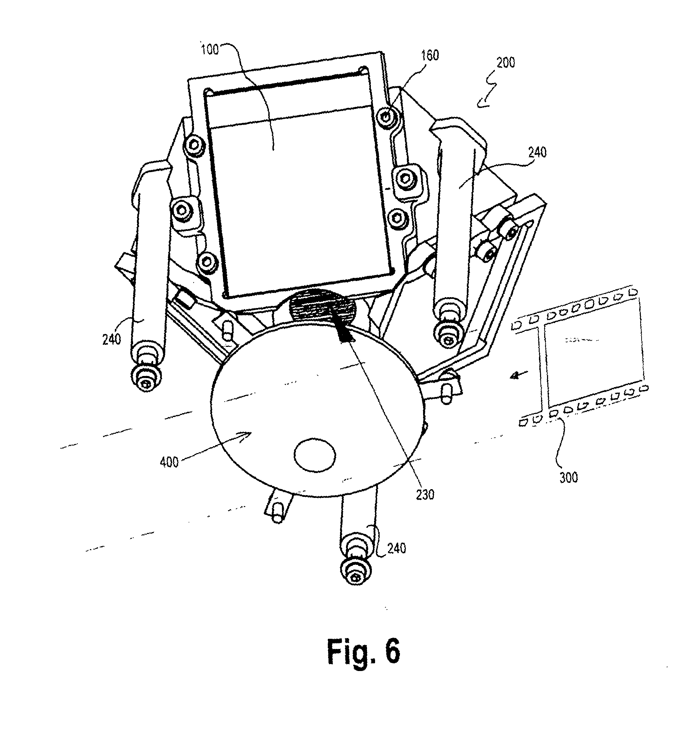

Fig. 6 zeigt eine Ansicht der in Fig. 5 gezeigten Ulbrichtkugel 200 von schräg unten, wobei gleiche Bezugszeichen wiederum gleiche Teile bezeichnen. Der Film 300 wird unterhalb der Kondensorlinse 400 durchgeführt. Die Austrittsöffnung 230 der Ulbrichtkugel ist deutlich erkennbar.

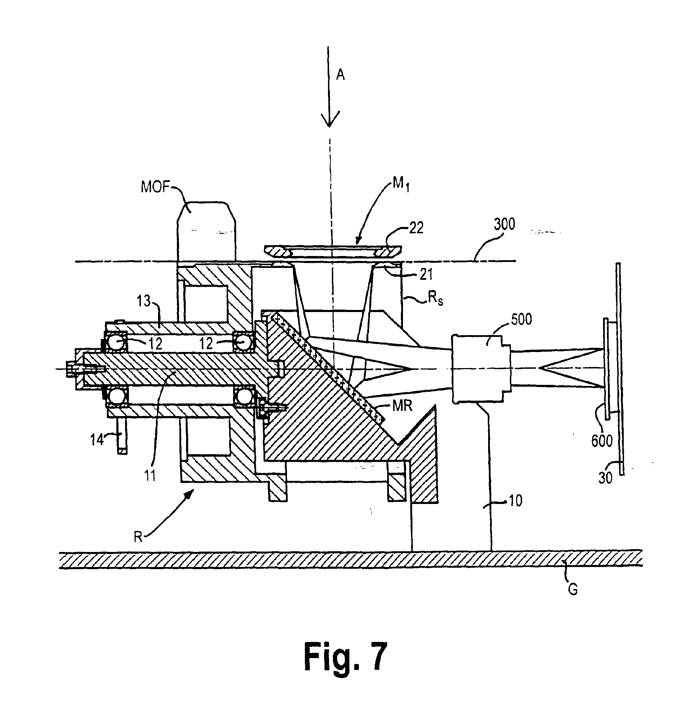

Fig. 7 zeigt einen beispielhaften Aufbau für das Bilderfassungsgerät ab der Filmebene 300 bis zum Detektor 600. Die Einfallsrichtung des Lichts ist mit dem Pfeil A bezeichnet. Der Film 300 wird durch eine Maske M1 gehalten, die eine Auflagemaske 21 und eine Andruckmaske 22 aufweist, die im geringen Abstand über der Auflagemaske angeordnet und federnd gehalten ist, so dass zwischen der Auflagemaske und der Andruckmaske ein schmaler Spalt verbleibt, durch den der abzutastende Film 300 hindurchgeführt wird. Ein Rotor R ist vorgesehen, an dem verschiedene Masken gehaltert sind. Auf einer Grundplatte G ist ein Träger 10 befestigt, welcher im Wesentlichen aus nicht näher bezeichneten, zur Grundplatte senkrechten und zur Grundplatte parallelen Schenkelteilen besteht. Die parallelen Schenkelteile ragen durch die offene Stirnseite Rₛ des Rotors in diesen hinein. Zwischen den parallelen Schenkelteilen ist der Umlenkspiegel MR, der das in Pfeilrichtung A eintretende Licht reflektiert, so montiert, dass er unter 45° zur Grundplatte G geneigt ist. Am freien Ende der parallelen Schenkelteile ist eine sich parallel zur Grundplatte G erstreckende Lagerwelle 11 befestigt. Auf dieser ist mittels zweier Kugellager 12 und eines am Rotor R ausgebildeten Lagerrohrs 13 der Rotor R drehbar gelagert. Das Lagerrohr 13 und damit der Rotor R ist mittels eines Antriebsriemens 14 von einem Motor 15 angetrieben. Die CCD 600 wird durch eine Platte 30 gehaltert.

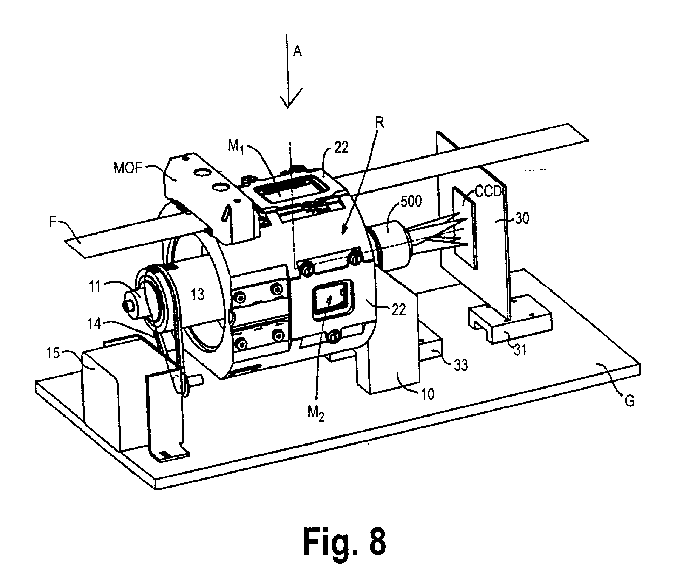

Fig. 8 zeigt eine der Fig. 7 entsprechende perspektivische Ansicht, auf der eine weitere Maske M2 für ein anderes, nämlich kleineres Filmformat erkennbar ist. Weiter ist ein Magnetlesekopf MOF zum Lesen der magnetischen Information bei APS-Filmen vorgesehen. Der Rotor zusammen mit den Filmmasken bildet die Austauschmechanik, um verschiedene Filmmasken je nach Bedarf in die für die Durchleuchtung vorgegebene Position zu bringen. Mit dem Austauschmechanismus kann mechanisch oder elektrisch (z.B. über eine Steuerung) ein Linsenaustauschmechanismus verbunden sein, der passend zum Filmformat und der damit vorgesehenen Maske die Position der Kondensorlinse ändert oder z.B. mittels eines Karussells oder Revolvers die Kondensorlinsen austauscht, um so die Größe des aus der Austrittsöffnung 230 austretenden Lichtkegels an die Maskengröße anzupassen.

Der Rotor R ist somit um eine zur Längsrichtung des Filmtransportpfades im Wesentlichen parallelen Achse drehverstellbar gelagert. Der Rotor R weist an seinem Umfang mindestens zwei Filmmasken M1, M2 für unterschiedliche Filmformate auf. Die Filmmasken sind durch Drehverstellung des Rotors R selektiv in den Filmtransportpfad einführbar.

Die Anwendung der offenbarten LED-Chip-Anordnung auf wärmeleitenden Substrat (Leuchtdiodenanordnungen) ist erfindungsgemäß nicht auf fotografische Erfassungsvorrichtungen beschränkt sondern können allgemein als hochintensive und schnell schaltbare Lichtquelle genutzt werden.

## Patentansprüche

1. Fotografische Erfassungsvorrichtung zum Erfassen fotografischer Bildinformation von fotografischen Medien,
mit einem Lichtintegrator (200), der von LED-Chips (120) emittiertes Licht mit einer für den jeweiligen LED-Chip spezifischen Farbe empfängt, homogenisiert und von einer Austrittsöffnung (230) abstrahlt, um ein eine fotografische Bildinformation tragendes fotografisches Medium (300) zu bestrahlen,
mit einem Detektionsmittel (600) zum Detektieren des durch das fotografische Medium entsprechend der Bildinformation modulierten Lichtes,
**dadurch gekennzeichnet, dass**
für mindestens drei verschiedene Farben eine Vielzahl von LED-Chips (120) gleicher Emissionsfarbe vorgesehen sind, die
auf mindestens einem wärmeleitenden Substrat (110) angeordnet sind, mit dem die LED-Chips in wärmeleitenden Kontakt sind,

2. Fotografische Erfassungsvorrichtung nach Anspruch 1, **dadurch gekennzeichnet, dass** das mindestens eine Substrat wärmeleitend mit einer Wärmesenke (190) verbunden ist und die von den LED-Chips aufgenommene Wärme zu der Wärmesenke weiterleitet.

3. Fotografische Erfassungsvorrichtung nach Anspruch 1 oder 2, **dadurch gekennzeichnet, dass** zur Erzielung einer hohen Leuchtdichte die LED-Chips (120) so dicht gepackt sind, dass sie mehr als 10% der Fläche abdecken, über der sie angeordnet sind.

4. Fotografische Erfassungsvorrichtung nach Anspruch 1 bis 3, **gekennzeichnet durch** eine Mikrolinsenanordnung (150), die eine Vielzahl von Mikrolinsen aufweist und die lichtintegratorseitig der LED-Chips derartig angeordnet ist, dass jeweils eine Mikrolinse jeweils einem LED-Chips zur Bündelung des von diesem emittierten Lichts zugeordnet ist.

5. Fotografische Erfassungsvorrichtung nach Anspruch 1 bis 4, **dadurch gekennzeichnet, dass** der Lichtintegrator (200) als Hohlraum ausgebildet ist, der Licht in sich selbst reflektiert und Licht durch die Austrittsöffnung (230) abgibt, wobei die LED-Chips an oder in Eintrittsöffnungen des Hohlraums derartig angeordnet sind, dass die LED-Chips direkt, ohne Reflexionen einen Großteil des Hohlraumes aber nicht die Austrittsöffnung bestrahlen.

6. Fotografische Erfassungsvorrichtung nach Anspruch 1 bis 5, **dadurch gekennzeichnet, dass** zumindest jeweils eine Gruppe mit blau-, grün und rotleuchtenden LED-Chips vorgesehen ist, wobei mehr blaue und grüne LED-Chips als rote LED-Chips vorgesehen sind.

7. Fotografische Erfassungsvorrichtung nach Anspruch 1 bis 6, **gekennzeichnet durch** eine Steuereinrichtung zum gruppenweisen Ansteuern der LED-Chips, wobei eine Gruppe LED-Chips aufweist, deren Emissionsfarbe innerhalb der Gruppe gleich ist aber sich von Gruppe zu Gruppe unterscheidet, und die Steuereinrichtung die Gruppen einzeln und sequentiell, jeweils für eine vorgegebene Zeit zur Lichtemission veranlasst, wobei als Detektionsmittel (600) ein fotoelektrischer Wandler vorgesehen ist, dessen Signale zur Unterscheidung der empfangenen Emissionsfarbe in zeitlicher Abstimmung mit der gruppenweisen Emission so ausgelesen werden, dass die ausgelesenen Signale jeweils der Emission einer Gruppe zugeordnet werden können.

8. Fotografische Erfassungsvorrichtung nach Anspruch 1 bis 7, **gekennzeichnet durch**
eine ersten optischen Anordnung (500), mit der das an einer vorgegebenen Position befindliche fotografische Medium (300) auf das Detektionsmittel (600) abbildbar ist;
mit einer zweiten optischen Anordnung (400), die die Austrittsöffnung vergrößert auf die erste optische Anordnung abbildet.

9. Fotografische Erfassungsvorrichtung nach Anspruch 1 bis 8, **gekennzeichnet durch** eine Halteinrichtung zum Halten eines fotografischen Mediums an einer für die Bestrahlung vorgegebenen Position, die mindestens zwei Masken (M1-M3) aufweist, wobei jede Maske für ein fotografisches Medium (300) mit einem anderen Format vorgesehen ist, um wahlweise das fotografische Medium mit der passenden Maske an der vorgegebenen Position zu halten, wobei hierzu jeweils eine der Masken mit einer Austauschmechanik ( R) selektiv in die vorgegebene Position bringbar ist.

10. Fotografische Erfassungsvorrichtung nach Anspruch 1 bis 9, **dadurch gekennzeichnet, dass** sie als Scanner oder Printer ausgebildet ist.
